# EUROPEAN PATENT APPLICATION

(11) **EP 4 446 748 A2**
(43) Date of publication of application: **16.10.2024**
(21) Application number: 24163756.0
(22) Date of filing: 15.03.2024
(51) Int. Cl.: G01N 35/04

(54) **APPARATUS FOR ROUTING A CONVEYING DEVICE OF BIOLOGICAL SAMPLES IN A LABORATORY AUTOMATION SYSTEM**

(30) Priority: 14.04.2023 IT 202300007287
(71) Applicant: Inpeco SA, 6883 Novazzano (CH)
(72) Inventor: PEDRAZZINI, Mr. Gianandrea, CH-6883 Novazzano (CH); SEBASTIANELLI, Stefano, CH-6883 Novazzano (CH)
(74) Representative: Buzzi, Notaro & Antonielli d'Oulx S.p.A.

(57) **Abstract**

It is described herein a laboratory automation system comprising at least one process station (2) having an automatic conveyor (3) for the transit of conveying devices (5) of containers of biological samples (4). The automatic conveyor (3) comprises a main lane (20) and a secondary lane (21) for the flow of said conveying devices (5), connected with each other by means of at least one connecting section (7). The system comprises a routing apparatus (10) having a diverting mechanism (40) to route the conveying devices (5) running along the connecting section (7) towards said main lane (20) or said secondary lane (21), allowing the continuous in line flow without stopping the conveying devices (5) upstream and downstream of the diverting mechanism (40). The diverting mechanism (40) comprises spaced diverting members (40a, 40b, 70a, 70b) configured movable and simultaneously controllable to jointly achieve a first diverting position or a second diverting position able to route conveying devices (5) to the main lane (20) or the secondary lane (21). The diverting members (40a, 40b, 70a, 70b) are configured and controlled to remain stationary in the second diverting position and to route towards the secondary lane (21) a plurality of conveying devices (5) running in line upstream of the diverting mechanism (40) and arriving one after the other at the connecting section (7), without having to control a movement of the diverting members (40a, 40b, 70a, 70b) for each conveying device (5).

## Description

### Field of the invention

The present invention concerns an apparatus for routing a conveying device of biological samples in a laboratory automation system.

### Prior art

In recent years, within laboratories for the analysis of biological samples, there has been an increasing use of automation systems aimed at sorting the samples themselves towards modules positioned in the laboratory and each dedicated to appropriate pre-analysis, analysis or post-analysis operations.

Needless to say, the increasing diversification of the specialties that may be present in the laboratory means that the number of modules which can be connected to an automation system is increasing, and thus the size of the system itself is increasing.

On the other hand, usually each biological sample travels within a laboratory automation system placed in a container (e.g. a test tube) that is in turn housed by a conveying device moved by an automatic conveyor, preferably of the belt type.

This configures automated paths comprising lanes used for the handling of such transport devices, according to routing logic managed on a software level by a central control unit.

In particular there is a main lane, preferably a close loop, which covers the entire extension of the automation system, and which in turn branches off at each module interfaced to the system into a secondary lane along which to route the transport devices which need to be routed towards that module.

Naturally, the greater is the number of modules interfaced to the system the greater is the number of secondary lanes and thus diversions present.

In some outdated automation systems, this diversion is accomplished by stopping the conveying device at a stop gate preceding the diverting point and laterally protruding from the profile of the automation system: only upon detection of the conveying device (preferably by means of an antenna placed under the belt of the automatic conveyor) and eventually of the test tube (preferably by a presence sensor), and upon confirmation by the central control unit of the arrival of the expected sample, there is the diversion of the conveying device into the secondary lane according to any known mechanism.

In recent years, on the fly diverting mechanisms have been established in which it is no longer necessary to stop the conveying device at a gate, the detection made upstream by the antenna already being sufficient to trigger a software side query of the system on the matching of the expected sample and subsequently, in case of positive confirmation, the appropriate diversion of the conveying device by the mechanism placed downstream.

In this regard, the Applicant has obtained the European patent EP 2780724 B1 which describes such a routing apparatus.

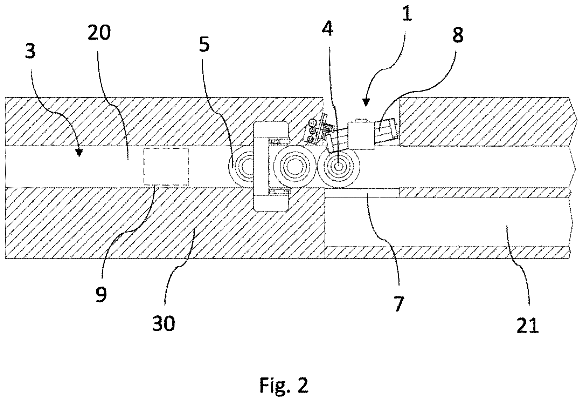

Problems arise in such a classical solution - illustrated in Figure 2 - because the conveying devices which must be diverted are subjected, during the operation that must push them from the main lane to the secondary lane interfacing with a module, to a thrust that must be sufficient to ensure the appropriate routing and therefore characterized by a certain force. Very often however, along laboratory automation systems, test tubes inserted in conveying devices travel uncapped, and the aforementioned thrust can sometimes be excessive and lead to the spillage of the biological sample (so called "spillage" phenomenon), with clear damage both in terms of loss of biological sample and contamination or simply dirt of the mechanical equipment.

In addition, the need to have to operate the diverting mechanism all the time, particularly in the case in which there is a considerable amount of consecutive conveying devices all to be diverted towards the secondary lane, can lead to a rapid wear of the mechanical parts used in such mechanism and thus to malfunctions or breakages, which are particularly serious since they force to isolate the module downstream of the diversion, to which samples cannot be temporarily routed, for repair and thus to slow down laboratory operations.

### Object of the invention

The object of the present invention is to develop a routing apparatus that overcomes the drawbacks of the known solutions, by ensuring a diversion of conveying devices with test tube that does not cause biological sample spillage from the uncapped test tubes being diverted.

A further object is to ensure an optimized activation of the routing apparatus, minimizing unnecessary movements of the components used to preserve them from wear and thus from malfunctions or breakages.

Still one object is to realize a routing apparatus with simple and low-cost means.

### Summary of the invention

In view of achieving one or more of the aforementioned objects, the invention relates to a laboratory automation system comprising at least one process station having an automatic conveyor for the transit of conveying devices of containers of biological samples,
- wherein said automatic conveyor comprises a main lane and a secondary lane for the flow of said conveying devices with an identical transit sense, connected with each other by means of at least one connecting section,
- wherein the system comprises at least one routing apparatus associated with said connecting section, having a diverting mechanism driven by at least one actuator to route the conveying devices running along the connecting section towards said main lane or said secondary lane, allowing the continuous in line flow without stopping the conveying devices upstream and downstream of the diverting mechanism,
- where the system comprises identification means configured to detect the transit of each conveying device and at least one central control unit configured to manage the appropriate routing of conveying devices,
said system being characterized in that the diverting mechanism comprises spaced diverting members configured movable and simultaneously controllable to jointly achieve a first diverting position or a second diverting position able to route conveying devices to the main lane or the secondary lane, wherein the diverting members are configured and controlled to remain stationary in the second diverting position and to route towards the secondary lane a plurality of conveying devices running in line upstream of the diverting mechanism and arriving one after the other at the connecting section, without having to control a movement of the diverting members for each conveying device.

In one embodiment, the diverting members are contact profiles spaced along opposite sides of the connecting section, mutually connected by means of a bridge profile comprising side connecting flanges joined by a horizontal section spaced above the transport plane of the conveyor and the contact profiles. In such an embodiment, the contact profiles are configured movable along a horizontal cross direction with respect to the transit direction of the conveying devices, to alternately assume said first or second diverting position, such that the conveying devices arriving at the connecting section are forced to follow the path defined by the position of the contact profiles, which respectively come into contact with opposite side portions of the conveying devices running in line and arriving one after the other at the connecting section.

In another embodiment, said diverting members are levers simultaneously controlled in rotation by a leverage mounted near the connecting section, in order to realize said first or second diverting position. In said embodiment, each lever comprises an elongated body with an arcuate shape having opposite main faces substantially parallel to the transport plane of the conveyor, wherein each elongated body comprises a lower surface parallel to and facing towards the transport plane of the conveyor, an upper surface opposite to the lower surface and connected to the respective shaft, the levers comprising a proximal portion connected to the shafts and being controlled with a controlled rotational motion to impact with the side surfaces of an upper portion of the conveying devices.

Further features of the invention are indicated in the following description and in the appended claims.

The invention also relates to a process for routing conveying devices of containers of biological samples along an automatic conveyor of a process station, comprising the following steps:
- setting up a system according to the aforementioned features,
- controlling said spaced diverting members to achieve a first diverting position or a second diverting position able to route conveying devices,
- maintaining stationary the diverting members in the second diverting position to route towards the secondary lane a plurality of conveying devices running in line upstream of the diverting mechanism and arriving one after the other at the connecting section.

### Detailed description of the invention

Further features and advantages of the invention will result from the description that follows with reference to the accompanying drawings, provided purely by way of non-limiting example, in which:
- Figure 1 is a perspective view of a portion of an automation system according to the prior art,
- Figure 2 is a detailed top view of a routing apparatus according to the prior art,
- Figures 3, 4 represent a top view of two different activation steps of a routing apparatus of the invention, according to a first embodiment,
- Figure 5 is a perspective view of the routing apparatus of the invention, according to a second embodiment,
- Figure 6 is a perspective view that is rotated by 180° with respect to Figure 5,
- Figure 7 is a sectional view of Figure 6, according to the cutting plane VII-VII of Figure 5,
- Figures 8, 9 represent a top view of two different activation steps of the routing apparatus of the invention, according to the aforementioned second embodiment
- Figure 10 is a perspective view of the routing apparatus of the invention, according to a third embodiment,
- Figures 11, 12 represent a top view of two different activation steps of the routing apparatus of the invention, according to the aforementioned third embodiment.

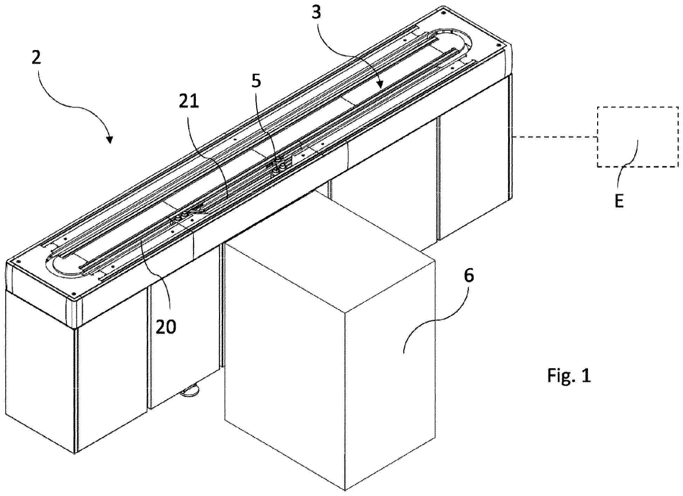

A known laboratory automation system used for the transport of biological samples is formed by a series of process stations 2, such as the one shown in Figure 1, assembled together in various numbers and according to different configurations to meet the specific needs of each analysis laboratory.

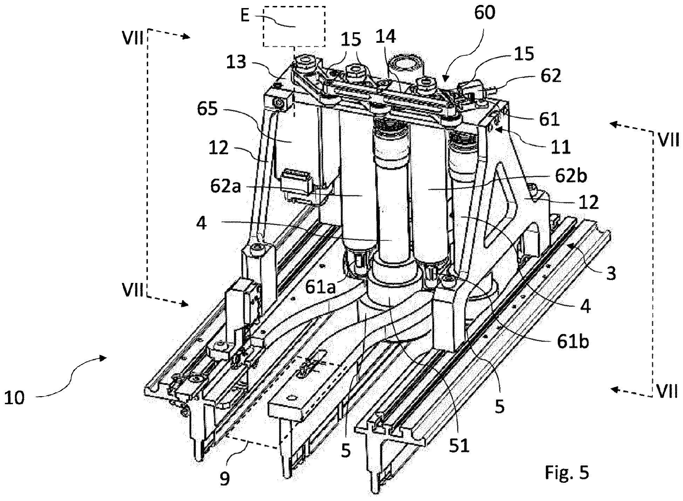

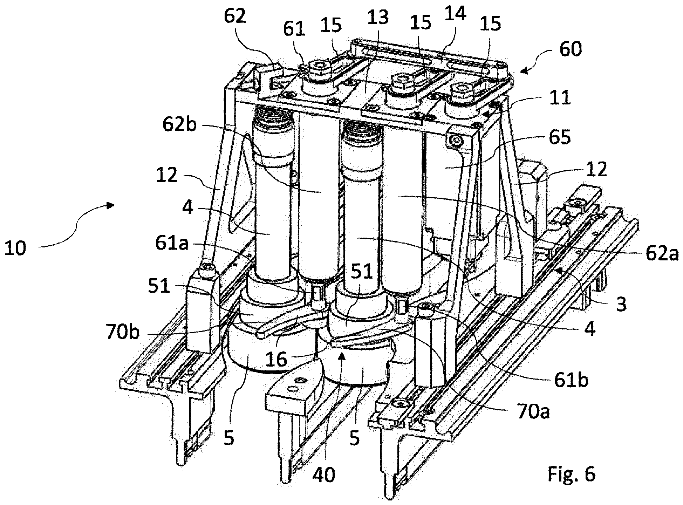

Each process station 2 has an automatic conveyor 3 for the transit of containers of biological samples 4 (shown in Figures 5, 6), preferably test tubes, each inserted into a conveying device 5. The conveying devices 5 can be made according to what is described in European Patent EP 3129791 B1 in the name of the same Applicant. The automatic conveyor 3 is in turn made according to a known configuration of any type, for example comprising a conveyor belt for dragging the conveying devices 5.

In particular, the automatic conveyor 3 has lanes for the flow of the conveying devices 5, and in particular a main lane 20 positioned internally and substantially configured for the ordinary transport of conveying devices 5, flanked in parallel by a secondary lane 21 typically intended instead to interface the conveying devices 5 flowing therein to a processing module 6 of biological samples, e.g. a pre-analysis, analysis or post-analysis module, preferably located on the outer side of the automation system (Figure 1).

The flow of the conveying devices 5 along the main lane 20 and the secondary lane 21 occurs with identical transit sense. In general terms, the transit sense of a lane is determined by the order of two lane points on which one conveying device 5 passes.

The diversion of each conveying device 5 from the main lane 20 to the secondary lane 21 is achieved by means of an appropriate routing apparatus, globally indicated in Figure 2 by the number 1 with reference to a configuration according to the prior art.

The routing apparatus 1 comprises a known type of diverting mechanism, such as a cam 8, which protrudes laterally from the main lane 20 and is able to activate upon detection of the conveying device 5 to be diverted by identification and control means - for example based on RFID technology - comprising an antenna 9 able to detect the passage of each conveying device 5. The antenna 9 is below the conveyor belt of the conveyor 3 and is positioned upstream of the routing apparatus 1. There is also a central control unit E of the entire automation system able to communicate with the single process station and to manage the appropriate routing of the conveying devices 5.

It should be noted that the construction profile 30 of the automatic conveyor 3 according to the prior art is thus shaped in such a way as to allow, upstream of the diversion, the ordinary flow of conveying devices 5, and thus of biological samples contained in the respective test tubes 4, only along the main lane 20. Only after any subsequent activation of the diverting mechanism (represented by the cam 8), the conveying devices 5 that need to be diverted towards the secondary lane 21 are appropriately pushed towards the latter, thus crossing a connecting section 7 between the two lanes 20, 21 obtained along the automatic conveyor 3.

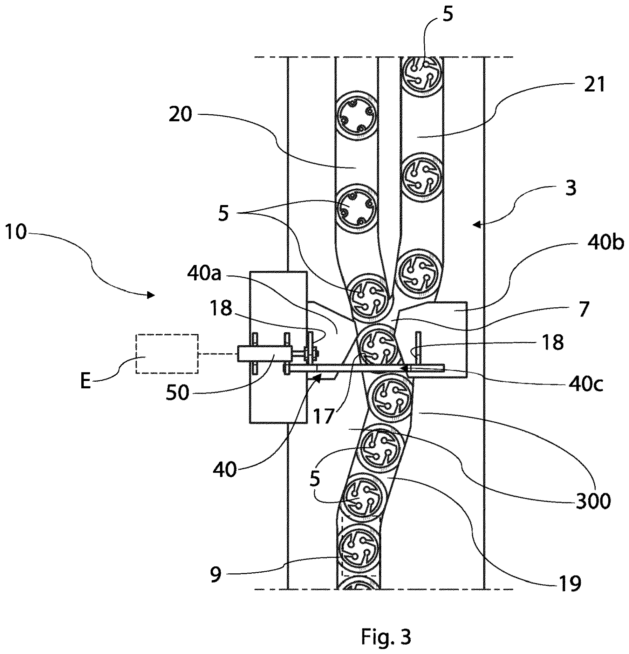

Figures 3, 4 and 5-9 respectively illustrate two embodiments of a routing apparatus 10, according to the present invention.

The routing apparatus 10 comprises a diverting mechanism 40, associated with a connecting section 7, configured to impact the conveying devices 5 passing through the connecting section 7, in order to route them towards the main lane 20 or the secondary lane 21. The diverting mechanism 40 comprises two diverting members 40a, 40b, 70a, 70b, 80a, 80b configured movable and simultaneously controllable to jointly achieve a first diverting position and a second diverting position, able to respectively route the conveying devices 5 to the main lane 20 or the secondary lane 21.

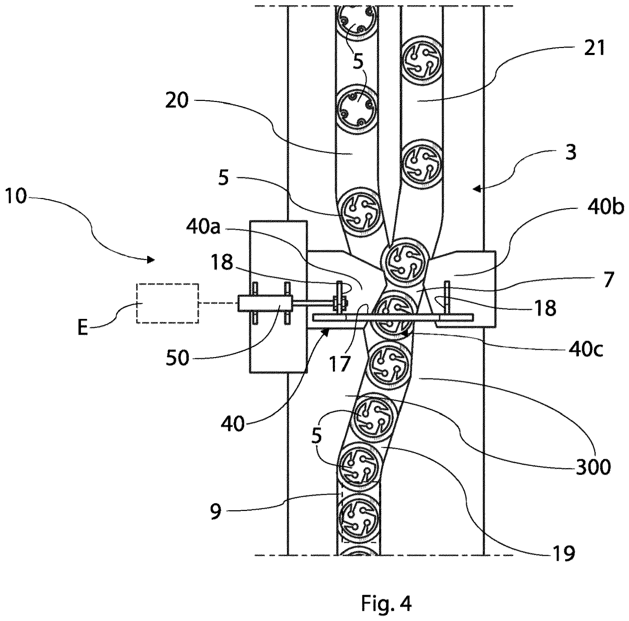

In the following the embodiment illustrated in Figures 3, 4 is described.

The routing apparatus 10 is implemented in a laboratory automation system comprising one or more process stations 2. As shown above for the prior art, the process station 2 comprises an automatic conveyor 3 for the transit of biological samples containers 4, preferably test tubes, each inserted into a conveying device 5. In this regard, it should be noted that conveying devices 5 without containers of biological samples 4 are shown in Figures 3, 4. The automatic conveyor 3 comprises lanes 20, 21 for the flow of the conveying devices 5. The main lane 20 and secondary lane 21 have in themselves the same configuration as the prior art, meaning they are placed parallel to each other. With reference to the specific configuration shown in Figures 3, 4, the construction profile 300 of the automatic conveyor 3 is shaped to create upstream of the connecting section 7 a single transit lane 19 for the conveying devices 5. It will then be appreciated that upstream of the connecting section 7, the conveyor 3 provides a single row of conveying devices 5, which are then diverted by the diverting mechanism 40 towards the main lane 20 or the secondary lane 21. Still with reference to the specific embodiment illustrated in Figures 3, 4, it should be noted that said single transit lane 19 develops an undulating path oriented so that the conveying devices 5 are channeled directly at the connecting section 7, e.g. at a position equidistant between the main lane 20 and the secondary lane 21.

The diverting mechanism 40 comprises two contact profiles 40a, 40b spaced along opposite sides of the end part of the single transit lane 19 that flows into the connecting section 7. The contact profiles 40a, 40b are mutually connected by means of a bridge profile 40c comprising a pair of side connecting flanges 18 joined by a horizontal section 17 spaced above the lane 19 and the contact profiles 40a, 40b. The connecting flanges 18 are rigidly connected to an upper face of the contact profiles 40a, 40b.

The contact profiles 40a, 40b are simultaneously movable along a horizontal cross direction with respect to the transit direction of the conveying devices 5, to alternately assume two positions (illustrated in Figures 3, 4) able to laterally impact the conveying devices 5 to appropriately route them, one after the other, along the main lane 20 or the secondary lane 21. The movement of the contact profiles 40a, 40b can be controlled by an actuator 50 of any known type.

In the operation, upstream of the connecting section 7, a row of conveying devices 5 flows along the single lane 19. Once the conveying devices 5 arrive, one after the other, at the connecting section 7, they are pushed by the diverting mechanism 40 controlled to alternately assume two positions: a first diverting position able to convey the conveying devices 5 along the main lane 20 (as illustrated in Figure 3) and a second diverting position able to convey the conveying devices 5 along the secondary lane 21 (as illustrated in Figure 4). Contact profiles 40a, 40b are shaped with a protruding portion towards the lane 19 able to laterally impact the conveying device 5 to appropriately route it along the main lane 20 or the secondary lane 21. In other words, the conveying devices 5 arriving at the connecting section 7 are forced to follow the path defined by the position of the contact profiles 40a, 40b, which respectively come into contact with opposite side portions of the conveying devices 5 running in line and arriving one after the other at the connecting section 7 and at the diverting mechanism 40. Preferably, the movement of the bridge profile 40c, and consequently of the two contact profiles 40a, 40b, in a horizontal direction perpendicular to the flow of the conveying devices 5 is facilitated by the activation of a pneumatic cylinder with rod 50 connected to it and arranged laterally to the conveyor 3. The rod 50 is connected to one of the side connecting flanges 18, thereby causing the motion of the bridge profile 40c and the contact profiles 40a, 40b, which move solidly with the bridge profile 40c.

Still with reference to the embodiment of Figures 3, 4, the antenna 9 for detecting the conveying devices 5 is placed, similarly to the prior art, below the conveyor belt of the automatic conveyor 3 and in particular preferably below the belt upstream of the connecting section 7. In particular, the antenna 9 is located sufficiently upstream of the beginning of the undulating section of the construction profile 300, along the transit direction of the conveying devices 5, so that the detection performed by the antenna 9 on each of the conveying devices 5 results in an information, which is then retrieved by the central control unit E of the automation system (illustrated in Figures 3, 4), regarding the need to route each detected conveying device 5 along the main lane 20 or the secondary lane 21. As a result of this information, the diverting mechanism 40 is appropriately activated, e.g. the movement of the actuator 50 brings the two contact profiles 40a, 40b to the position able to direct the conveying device 5 to the main lane 20 or the secondary lane 21. In general, the features and components necessary for identifying the conveying devices 5 passing through towards the diverting mechanism 40, can be made in accordance with what is described in patent EP 2780724 B1 in the name of the same Applicant.

The routing which each conveying device 5 undergoes is such that the diverting mechanism 40 essentially becomes a continuation of the construction profile 300 (Figures 3, 4), able to push the conveying device 5 whichever lane it is to be diverted into. This, coupled with the fact that the conveying device 5 essentially receives a thrust from the midpoint of the connecting section 7 between the two lanes 20, 21, causes it to travel midstroke compared to the diverting mechanisms according to the prior art, in which it must instead completely move from the main lane 20 to the secondary lane 21 in the event of a diversion. So the thrust it experiences, in the apparatus according to the invention, is more limited, though certainly sufficient to route the conveying device 5 into the appropriate lane.

The configuration of the routing apparatus 10 according to the invention certainly lends itself to ensure full functionality if the conveying devices 5 are to be diverted alternately between the main lane 20 and the secondary lane 21: the movement of the diverting mechanism 40 along its axis, perpendicular to the direction of flow of the conveying devices 5, is indeed such as to bear the arrival in rapid succession and the appropriate routing of conveying devices 5. Note in this regard how Figure 3 represents the situation wherein the arriving conveying devices 5 are routed along the main lane 20, while the successive Figure 4 depicts the moment wherein after the movement of the diverting mechanism 40 (cylinder with rod 50, bridge 40c and profiles 40a, 40b) the conveying devices 5 are now routed along the secondary lane 21.

However, the use of the routing apparatus 10 according to the invention is particularly suitable especially in the case wherein a number of consecutive conveying devices 5 are to be routed along the same lane. In such a situation, indeed, it becomes necessary to move the diverting mechanism 40 only when the first among them arrives. Thereafter the diverting mechanism 40 remains stationary while still correctly routing the next conveying devices 5, meanwhile all previously detected by the antenna 9, and which at that point are not pushed but only accompanied.

When a conveying device 5 to be routed to the other lane 20, 21 comes to antenna 9, the diverting mechanism 40 receives from the central control unit E the appropriate command to move towards the complementary position and the conveying device 5 is thus routed towards the other lane 20, 21.

Hence, the diverting mechanism 40 according to the invention, in the not infrequent situations in which several consecutive conveying devices 5 must undergo the same routing, is activated a considerably lower number of times than with the diverters of the known solutions, in which instead the presence of a certain number of consecutive conveying devices 5 all to be diverted along the secondary lane 21 requires the activation of the diverter (e.g. the cam 8 shown in Figure 1) for each of them.

On the other hand, with the solution illustrated in Figures 3, 4, the two lanes 20, 21 become conceptually identical and the main lane 20 is no longer identified as predominant as the default path of the conveying devices 5 (with no need for any diversion) with respect to the secondary 21 (to which there is the need to divert them) as it is instead in the prior art, since the effort, in terms of use of mechanical resources, required to the apparatus 10 to route the conveying devices 5 to one or the other lane is now exactly the same.

The use of the routing apparatus 10 of the invention, with the diverting mechanism 40, therefore makes the two lanes 20, 21 interchangeable, more easily foreshadowing a potential reorganization of the arrangement of machinery interfacing with the laboratory automation system, for example the repositioning of a module 6 along the inner lane of the conveyor 3 instead of the outer lane.

Figures 5-9 illustrate an alternative and preferred embodiment of the present invention. In this regard, Figures 5, 6 are perspective views illustrating the routing apparatus 10 with the observer upstream and downstream of the diverting mechanism 40, respectively.

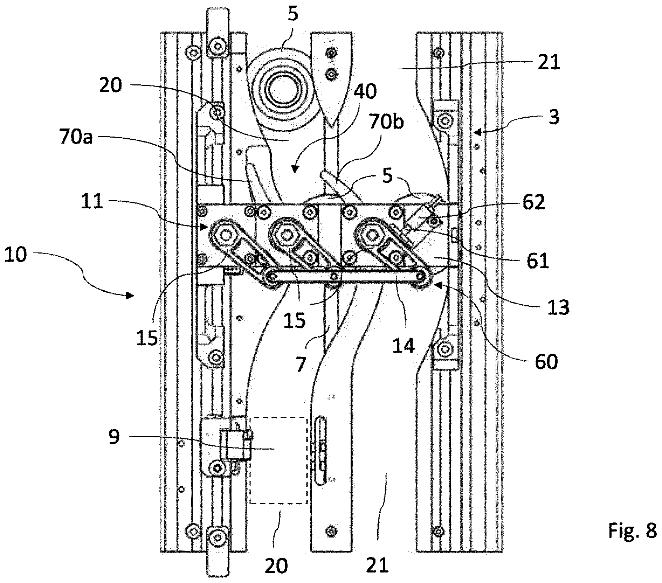

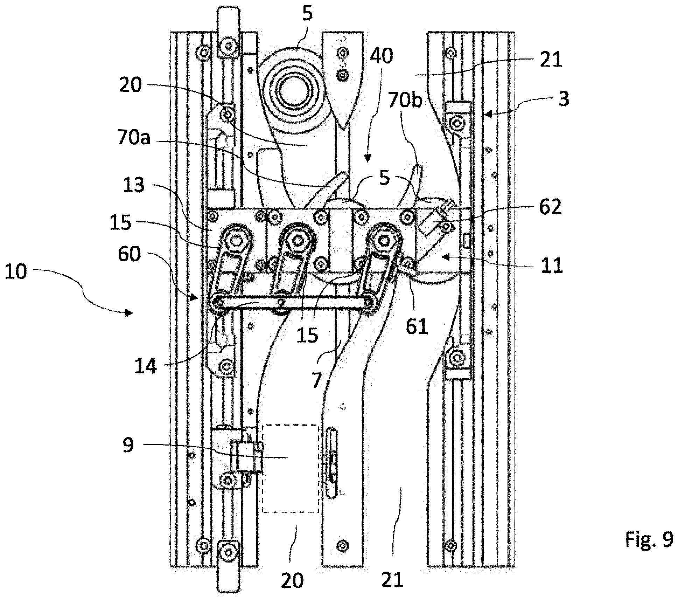

According to this embodiment, the diverting mechanism 40 comprises a pair of levers 70a, 70b controlled in rotation by a leverage 60 mounted near the connecting section 7. Levers 70a, 70b are simultaneously controllable to jointly achieve a first diverting position (as shown in Figure 8) and a second diverting position (as shown in Figure 9), suitable to impact the conveying devices 5 and route them towards the lanes 20, 21.

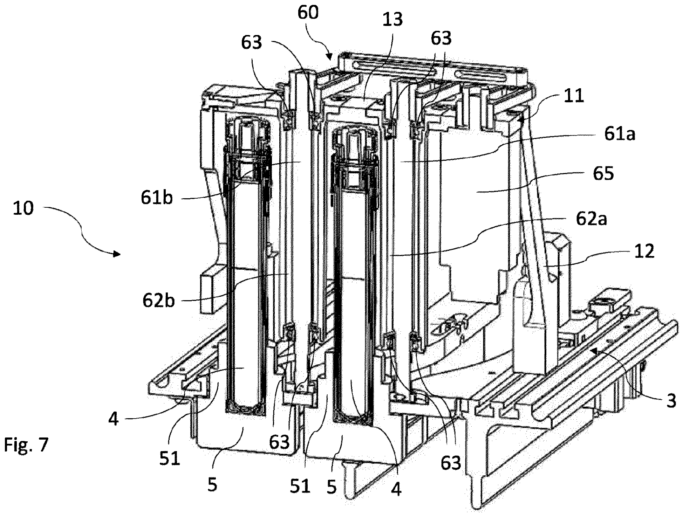

Levers 70a, 70b are indirectly connected to the linkage 60, as they are respectively keyed to a pair of shafts 61a, 61b directly controlled in rotation by the leverage 60. Shafts 61a, 61b vertically extend parallel and spaced apart above conveyor 3, without obstructing the passage of the conveying devices 5 and test tubes 4 along the lanes 20, 21. Shafts 61a, 61b are coaxially inserted in turn within fixed sleeves 62a, 62b (Figures 5, 6), each equipped with upper and lower bearings 63. In this regard, it should be noted the sectional view of Figure 7 illustrating the shafts 61a, 61b internally extended within the sleeves 62a, 62b.

Each lever 70a, 70b comprises an elongated body with an arcuate shape having opposite main faces substantially parallel to the transport plane of the conveyor 3. Each elongated body comprises a lower surface parallel to and facing towards the transport plane of the conveyor 3, an upper surface 16 opposite to the lower surface and connected to the shafts 61a, 61b, an inner side surface facing the inner side surface of the other lever, and an outer side surface opposite to the inner side surface. Looking at Figure 6, it should be noted that the elongated body with an arcuate shape of each lever 70a, 70b comprises a proximal portion connected to the shafts 61a, 61b and a distal portion with a width less than that of the proximal portion.

Leverage 60 is mounted on a bridge structure 11 comprising side vertical support portions 12, respectively extending at the opposite sides of the conveyor 3. Such side vertical portions 12 are mutually connected by a horizontal section 13 spaced above the conveyor 3, having a lower face facing the conveyor 3 and an opposite upper face above which the leverage 60 is mounted. The upper end of sleeves 62a, 62b is connected to the lower face of the horizontal section 13, thereby supporting the sleeves 62a, 62b above the conveyor 3. With reference to Figure 6, it should be noted that respective portions of the lower end of shafts 61a, 61b, to which levers 70a, 70b are connected, protrude from the lower end of the sleeves 62a, 62b. In light of the above configuration, it should therefore be noted that levers 70a,70b mainly extend along a plane parallel to and spaced above the transport plane of the devices 5, so that they can impact with the side surfaces of an upper portion 51 of the conveying devices 5.

Leverage 60 is operatively connected to the upper end of the shafts 61a, 61b, to transmit a rotational command to the levers 70a, 70b. Leverage 60 comprises parallel and integral connecting rods 15, mutually connected by a drive bar 14. In particular, in a preferred embodiment there are three connecting rods, the first of which is connected to and rotationally controlled by an actuator, while the other two connecting rods are respectively connected to the shafts 61a, 61b. The rotation of the first connecting rod controlled by the actuator is transmitted by means of the drive bar 14 to the other two connecting rods, which control in rotation the shafts 61a, 61b around their vertical axis, thus moving the levers 70a, 70b with a controlled rotational motion.

As an alternative to the use of connecting rods 15, another embodiment (not illustrated) of the leverage 60 can comprise other known mechanisms, e.g. a gear by means of cogwheels.

In the operation, the leverage 60 is appropriately activated by an actuator - for example an electric motor 65 - always controlled on a software level by the central control unit E (indicated in Figure 5). The rotation of the shafts 61a, 61b leads to the movement, still alternating between two end positions, of the levers 70a and 70b (Figures 6, 8, 9), which carry out the routing of the transport devices 5 along one or the other between the two lanes 20, 21 in a similar way as previously described. In greater detail, the central control unit E is able to impart a rotational command, preferably about 50°, to the electric motor 65. The resulting movement of the leverage 60, which consists of the connecting rods 15 integral with each other, sets in turn both shafts 61a, 61b (visible in the section of Figure 7) in rotation. The rotation of the shafts 61a, 61b is transmitted to the two levers 70a, 70b keyed to them, which therefore rotate thereby modifying the direction of the conveying devices 5 as previously described. Of course each reverse rotation of the electric motor 65 results in a reverse rotation of the two shafts 61a, 61b, as well as of the levers 70a, 70b which therefore return to their previous position.

According to a further feature of the embodiment illustrated in Figures 5-9, the two lanes 20, 21 also extend upstream of the connecting section 7 and the diverting mechanism 40, thus allowing the circulation of two parallel rows of conveying devices 5 also upstream of the routing apparatus 10. It should also be noted that upstream of the connecting section 7 and near it, the lanes have a slightly curved parallel path. With reference to the above indicated configuration of the conveyor 3, one of the two levers (indicated with the reference 70a and referred to in the following as the "first lever") has its proximal portion placed laterally with respect to the main lane 20, while the other of said two levers (indicated with the reference 70b and referred to in the following as the "second lever") has its proximal portion placed between the main lane 20 and the secondary lane 21. In view of the above configuration, the levers 70a, 70b are arranged to act on two conveying devices 5 placed side by side belonging to two different rows passing simultaneously through the connecting section 7.

Figures 8, 9 are elevation views illustrating the two different diverting positions of the levers 70a, 70b.

Looking at the elevation view of Figure 8, it should be noted that the first lever 70a extends along an outer side of the main lane 20, and the second lever 70b extends between the main lane 20 and the secondary lane 21. In such positions, the first lever 70a does not affect the path of the conveying devices 5, while the second lever 70b comes into contact with the conveying devices 5 passing through the main lane 20, causing them to still continue along the main lane 20 downstream of the connecting section 7. More specifically, the inner side face of the second lever 70b comes into contact with the side surface 51 of an upper portion of the conveying devices 5, which run in line and come into contact one after the other with the second lever 70b. In the position illustrated in Figure 8, levers 70a, 70b do not come into contact with the conveying devices 5 passing through the secondary lane 21 upstream of the connecting section 7, which are then free to continue their path along the secondary lane 21 downstream of the diverting mechanism 40.

Looking at the elevation view of Figure 9, it should be noted that the first lever 70a comes into contact with the conveying devices 5 passing through the main lane 20 upstream of the connecting section 7, directing them towards the secondary lane 21 downstream of the connecting section 7; the second lever 70b blocks instead the flow of the conveying devices 5 passing through the secondary lane 21 upstream of the connecting section 7. More particularly, the inner side face of the first lever 70a comes into contact with the side surface 51 of an upper portion of the conveying devices 5, which run in line and come into contact one after the other with the first lever 70a; the outer side face of the second lever 70b blocks instead the transit to the row of conveying devices 5 coming from the secondary lane 21, narrowing the passage with its elongated body with an arcuate shape.

Leverage 60 also comprises a flap 61 (Figure 5) able to engage or not with a fork presence sensor 62, respectively depending on whether or not the leverage 60 itself is in the basic (so called "home") position, corresponding to the positioning of the levers 70a and 70b to the left (as illustrated in Figure 8) able to facilitate the continuation of the incoming conveying devices 5, both along the main lane 20 and the secondary lane 21, since both are free. The disengagement of the flap 61 from the presence sensor 62, on the other hand, discriminates the situation wherein the levers 70a and 70b are rotated to the right (as illustrated in Figure 9), and thus the conveying devices 5 arriving from the main lane 20 are diverted to the secondary lane 21, and vice versa those arriving from the secondary lane 21 are blocked by the lever 70b so that priority is given to the first ones. In this regard, it should be noted that in Figure 6, the levers 70a, 70b are in the position illustrated and described above related to Figure 9, e.g. with flap 61 and sensor 62 disengaged, in contrast with Figure 5 where they are instead engaged.

In the light of the above, a peculiarity of the embodiment of Figures 5-9 is indeed to provide that, while allowing the free flow of the conveying devices 5 along the secondary lane 21 upstream of the connecting section 7, the lever 70b blocks when necessary such conveying devices 5 in transit, the latter ones being suitably overtaken on entering the secondary lane 21 by those arriving from the main lane 20 and which are being diverted by the diverting mechanism 40.

This solution is preferable to the previous one because, by still routing each conveying device 5 starting from a position equidistant between the two lanes 20, 21 along the connecting section 7, it never realizes any thrust on it but always and only a simple accompaniment.

According to a further simplified form of implementation than that illustrated in Figures 5-9, only one lane is provided upstream of the connecting section 7 and the diverting mechanism 40, as with the form of implementation in Figures 3, 4. In such a case, the conveying devices 5 passing through the connecting section 7 can either continue the path along the main lane 20 by coming into contact with the second lever 70b (as shown in Figure 8), or be diverted towards the secondary lane 21 by coming into contact with the first lever 70a (the second lever 70b is instead irrelevant, given the absence of the secondary lane 21 upstream of the connecting section 7).

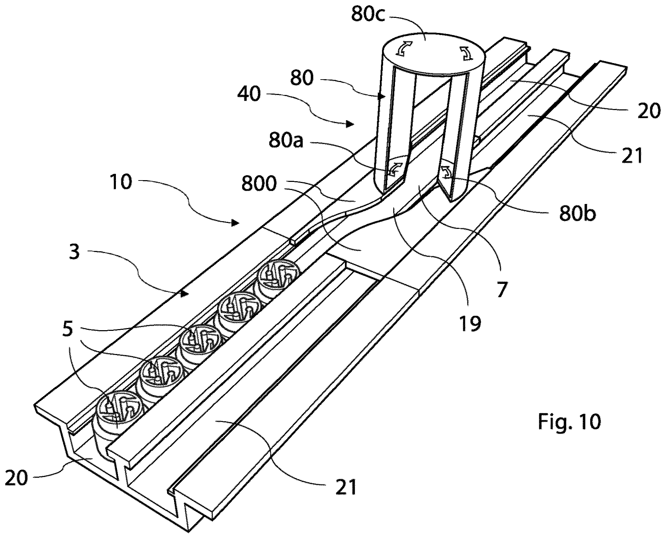

In a further embodiment of the routing apparatus 10, shown in Figures 10-12, the diverting mechanism 40 comprises a cylindrical block 80 extended along a vertical axis perpendicular to the lanes 20, 21 and positioned on the upper surface of the construction profile 800 of the automatic conveyor 3, at the connecting section 7. The cylindrical block 80 is configured to be controlled in rotation about its vertical axis so as to interface with the conveying devices 5 which transit at the connecting section 7. It should also be noted that the cylindrical block comprises an open sector defined between its lower base and its upper base 80c, arranged to allow the passage of the test tubes supported by the conveying devices 5 which pass through the connecting section 7 and must overcome the cylindrical block 80 appropriately controlled in rotation.

The lower base of the cylindrical block 80 is defined by two contact profiles 80a, 80b capable of alternately overlapping, depending on the rotation of the block 80, to one of the two side walls of the construction profile 800, substantially following in this way its shape to alternately assume said first or second diverting position, thereby realizing the appropriate routing of conveying devices 5 in transit, alternately, along the main lane 20 or the secondary lane 21.

Figures 10-12 illustrate the conveying devices 5 arriving from the main lane 20, and it is again the conformation of the construction profile 800 of the automatic conveyor 3 that creates an undulating section that results in a single transit lane 19 functional to bring the conveying devices 5 at the connecting section 7, and thus at the interfacing with the cylindrical block 80, in an equidistant position between the main lane 20 and the secondary lane 21. It is obvious that a completely mirror solution (not shown in the figures) wherein the conveying devices 5 all arrive from the secondary lane 21 is conceptually totally identical.

The diverting mechanism 40 thus comprises again two contact profiles 80a, 80b spaced along opposite sides of the end part of the single transit lane 19 that flows into the connecting section 7. The contact profiles 80a, 80b are mutually connected by means of the upper base 80c of the cylindrical block 80.

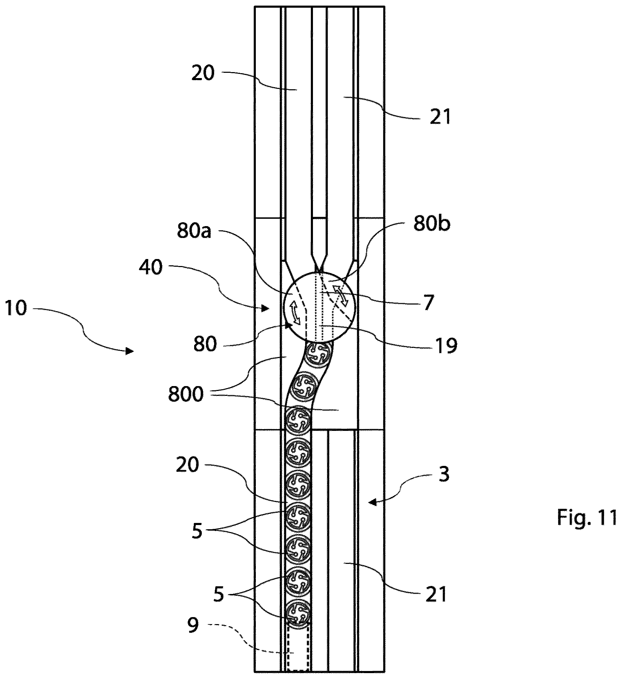

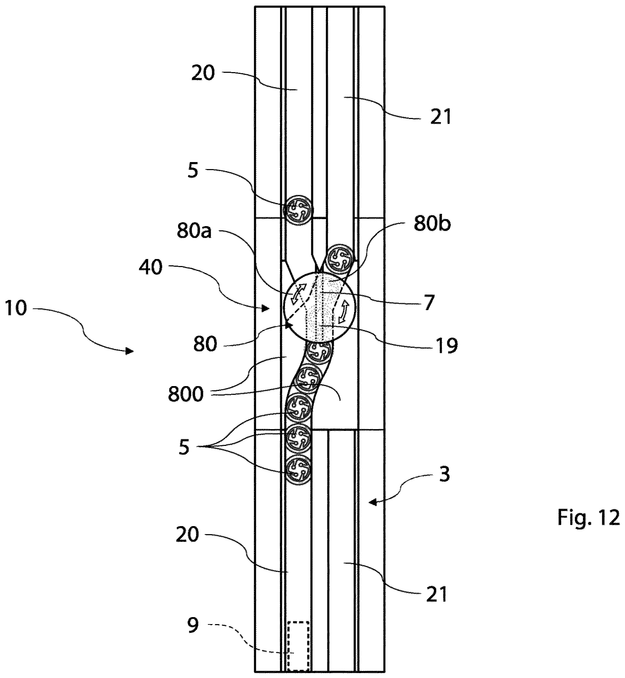

The contact profiles 80a, 80b are simultaneously rotatable about the axis of rotation of the cylindrical block 80, to alternately assume the two positions (shown in Figures 11, 12) able to laterally impact the conveying devices 5 to route them towards the main lane 20 or the secondary lane 21.

More specifically, observing the position of the cylindrical block 80 illustrated in Figure 11, a first contact profile 80a overlaps one of the two side walls of the construction profile 800 and does not come into contact with the conveying devices 5, while a second contact profile 80b overlaps the connecting section 7 and forces the conveying devices 5 to transit downstream of the cylindrical block 80 along the main lane 20. Looking at the position of the cylindrical block 80 illustrated in Figure 12, it should be noted a mirror position with respect to the previous one, wherein the second contact profile 80b overlaps one of the two side walls of the construction profile 800, while the first contact profile 80a overlaps the connecting section 7 and forces the connecting devices to transit downstream of the cylindrical block 80 along the secondary lane 21.

The rotation of the cylindrical block 80 and thus of the contact profiles 80a, 80b can be activated by an actuator (not shown) of any known type, controlled by the central control unit E.

This routing solution essentially resumes the first embodiment of Figures 3-4, again resulting more advantageous since, in the face of a simplification of the mechanical components employed, an accompaniment of each diverted conveying device 5 is performed at the axis of rotation of the cylindrical block 80, with a consequent significant reduction in the lateral accelerations to which it is subjected.

As it is evident from the above description, the routing apparatus 10 according to the invention, by acting on conveying devices 5 that are located at a point equidistant between the two possible destination lanes, exhibits on them a thrust significantly less, if not even absent, with respect to the known solutions, limiting the phenomena of leakage of biological material from the eventual uncapped test tubes contained in the conveying devices themselves.

In addition, the routing apparatus 10 of the invention allows to limit the activations of mechanical parts with respect to the known solutions, preserving the components used from wear and from malfunctions or breakages.

Studies and experiences conducted by the Applicant have shown that the use of a routing apparatus according to the invention allows to significantly speed up the routing operations of biological samples within laboratory automation systems, with respect to the known solutions.

Naturally, without prejudice to the principle of the invention, the construction details and the embodiments may vary widely with respect to what is described and illustrated purely by way of example, without thereby departing from the scope of protection of the present invention, as defined in the appended claims.

## Claims

1. A laboratory automation system comprising at least one process station (2) having an automatic conveyor (3) for the transit of conveying devices (5) of containers of biological samples (4),
- wherein said automatic conveyor (3) comprises a main lane (20) and a secondary lane (21) for the flow of said conveying devices (5) with an identical transit sense, connected with each other by means of at least one connecting section (7),
- wherein the system comprises at least one routing apparatus (10) associated with said connecting section (7), having a diverting mechanism (40) driven by at least one actuator to route the conveying devices (5) running along the connecting section (7) towards said main lane (20) or said secondary lane (21), allowing the continuous in line flow without stopping the conveying devices (5) upstream and downstream of the diverting mechanism (40),
- wherein the system comprises identification means configured to detect the transit of each conveying device (5) and at least one central control unit (E) configured to manage the appropriate routing of the conveying devices (5),
said system being **characterized in that** the diverting mechanism (40) comprises spaced diverting members (40a, 40b, 70a, 70b, 80a, 80b) configured movable and simultaneously controllable to jointly achieve a first diverting position or a second diverting position able to route conveying devices (5) to the main lane (20) or the secondary lane (21), wherein the diverting members (40a, 40b, 70a, 70b, 80a, 80b) are configured and controlled to remain stationary in the second diverting position and to route towards the secondary lane (21) a plurality of conveying devices (5) running in line upstream of the diverting mechanism (40) and arriving one after the other at the connecting section (7), without having to control a movement of the diverting members (40a, 40b, 70a, 70b, 80a, 80b) for each conveying device (5).

2. System according to claim 1, wherein said diverting members are contact profiles (40a, 40b) spaced along opposite sides of the connecting section (7), mutually connected by means of a bridge profile (40c) comprising side connecting flanges (18) joined by a horizontal section (17) spaced above the transport plane of the conveyor (3) and the contact profiles (40a, 40b).

3. System according to claim 2, wherein the contact profiles (40a, 40b) are configured movable along a horizontal cross direction with respect to the transit direction of the conveying devices (5), to alternately assume said first or second diverting position, such that the conveying devices (5) arriving at the connecting section (7) are forced to follow the path defined by the position of the contact profiles (40a, 40b), which respectively come into contact with opposite side portions of the conveying devices (5) running in line and arriving one after the other at the connecting section (7).

4. System according to claim 3, wherein upstream of the connecting section (7) said conveyor (3) includes a single transit lane (19) for the conveying devices (5), configured to direct the conveying devices (5) straight at the connecting section (7) in a position at the same distance between the main lane (20) and the secondary lane (21).

5. System according to claim 1, wherein said diverting members are levers (70a, 70b) simultaneously controlled in rotation by a leverage (60) mounted near the connecting section (7), in order to realize said first or second diverting position.

6. System according to claim 5, wherein each of said levers (70a,70b) is respectively keyed to a shaft (61a, 61b) vertically extended above the conveyor (3) and directly controlled in rotation by the leverage (60).

7. System according to claim 6, wherein each lever (70a, 70b) comprises an elongated body with an arcuate shape having opposite main faces substantially parallel to the transport plane of the conveyor (3), wherein each elongated body comprises a lower surface parallel to and facing towards the transport plane of the conveyor (3), an upper surface (16) opposite to the lower surface and connected to the respective shaft (61a, 61b), the levers (70a,70b) comprising a proximal portion connected to the shafts (61a, 61b) and being controlled with a controlled rotational motion to impact with the side surfaces of an upper portion (51) of the conveying devices (5).

8. System according to claim 5, wherein the leverage (60) is mounted on a bridge structure (11) comprising side vertical support portions (12) mutually connected by a horizontal section (13) spaced above the conveyor (3), having a lower face facing the conveyor (3) and an opposite upper face above which the leverage (60) is mounted.

9. System according to claim 6, wherein the leverage (60) comprises parallel and integral connecting rods (15), mutually connected by a drive bar (14), wherein a first connecting rod is connected and controlled in rotation by an actuator and the other connecting rods are respectively connected to the shafts (61a, 61b).

10. System according to claim 7, wherein a first lever (70a) of said two levers (70a, 70b) has its proximal portion positioned laterally with respect to the main lane (20), and a second lever (70b) of said two levers (70a, 70b) has its proximal portion positioned between the main lane (20) and the secondary lane (21).

11. System according to claim 10, wherein in the first diverting position:
- the first lever (70a) extends outside the main lane (20) without getting in contact with the conveying devices (5) running along the conveyor (3), and
- the second lever (70b) extends between the main lane (20) and the secondary lane (21) to get in contact with the conveying devices (5) running along the main lane (20), in order to make them always proceed along the main lane (20) downstream of the connecting section (7).

12. System according to claim 10 or 11, wherein in the second diverting position,
- the first lever (70a) gets in contact with the conveying devices (5) running along the main lane (20) upstream of the connecting section (7), directing them towards the secondary lane (21) downstream of the connecting section (7), and
- the second lever (70b) blocks the flow of the conveying devices (5) running along the secondary lane (21) upstream of the connecting section (7).

13. System according to claim 1, wherein said diverting members are contact profiles (80a, 80b) defined at the lower base of a rotatable cylindrical block (80), said contact profiles (80a, 80b) being in turn rotatable about the axis of rotation of said cylindrical block (80), to alternately assume said first or second diverting position.

14. System according to any of the previous claims, wherein said main and secondary lanes (20, 21) also extend parallel upstream of the connecting section (7).

15. Process for routing conveying devices (5) of containers of biological samples (4) along an automatic conveyor (3) of a process station (2), comprising the following steps:
- setting up a system according to any of the preceding claims,
- controlling said spaced diverting members (40a, 40b, 70a, 70b, 80a, 80b) to achieve a first diverting position or a second diverting position able to route conveying devices (5),
- maintaining stationary the diverting members (40a, 40b, 70a, 70b, 80a, 80b) in the second diverting position to route towards the secondary lane (21) a plurality of conveying devices (5) running in line upstream of the diverting mechanism (40) and arriving one after the other at the connecting section (7).

16. Process according to claim 15, wherein said diverting members are two contact profiles (40a, 40b) spaced along opposite sides of the connecting section (7), mutually connected by means of a bridge profile (40c) comprising side connecting flanges (18) joined by a horizontal section (17) spaced above the transport plane of the conveyor (3) and the contact profiles (40a, 40b).

17. Process according to claim 15, wherein said diverting members are levers (70a, 70b) simultaneously controlled in rotation by a leverage (60) mounted near the connecting section (7), in order to realize said first or second diverting position.

18. Process according to claim 15, wherein said diverting members are contact profiles (80a, 80b) defined at the lower base of a rotatable cylindrical block (80), said contact profiles (80a, 80b) being in turn rotatable about the axis of rotation of said cylindrical block (80), to alternately assume said first or second diverting position.
